# EUROPEAN PATENT APPLICATION

(11) **EP 4 557 258 A1**
(43) Date of publication of application: **21.05.2025**
(21) Application number: 23214985.6
(22) Date of filing: 07.12.2023
(51) Int. Cl.: G08G 1/0967, G08G 1/16

(54) **COOPERATIVE MANEUVERING METHOD AND APPARATUS BASED ON INFRASTRUCTURE GUIDANCE, AND STORAGE MEDIUM STORING COMPUTER-EXECUTABLE PROGRAM**

(30) Priority: 14.11.2023 KR 20230157300
(71) Applicant: Korea National University of Transportation Industry-Academic Cooperation Foundation, Chungju-si, Chungcheongbuk-do 27469 (KR)
(72) Inventor: MUN, Cheol, 17162 Yongin-si (KR)
(74) Representative: Betten & Resch

(57) **Abstract**

Provided is a cooperative maneuvering method based on infrastructure guidance including receiving a first message including a planned path from each of at least one vehicle, determining an infrastructure guidance path for the at least one vehicle based on the planned path, and transmitting a second message including the infrastructure guidance path to the at least one vehicle.

## Description

### TECHNICAL FIELD

The following disclosure relates to a cooperative maneuvering method and apparatus based on infrastructure guidance, and a storage medium storing a computer-executable program.

### BACKGROUND

With regard to autonomous vehicles, cooperative maneuvering technology has been developed to allow autonomous vehicles to share driving intentions, that is, maneuvering, with each other through V2X (Vehicle to Everything) communication and to allow each autonomous vehicle to predict and avoid collisions or interference in consideration of driving intentions of surrounding vehicles when establishing a local path plan to plan a driving path for the next few seconds.

To this end, cooperative maneuvering through 1:1 driving negotiation between autonomous vehicles is possible. However, in an environment where lanes are reduced due to city intersections or an unexpected situation, a local path plan of one autonomous vehicle affects establishment of local path plans of a plurality of (N) surrounding autonomous vehicles, and thus N:N driving negotiation needs to be performed.

However, in a situation where traffic conditions are constantly changing, there is a problem that it is almost impossible to agree on local path plans of N autonomous vehicles through N:N driving negotiation within a given time. However, research thereon is insufficient.

### SUMMARY

Disclosed embodiments are intended to solve the above problems, and provide a cooperative maneuvering method and apparatus based on infrastructure guidance, and a storage medium storing a computer-executable program.

Disclosed embodiments provide an infrastructure guidance path for at least one vehicle based on a planned path.

Disclosed embodiments provide a message to be transmitted and received for cooperative maneuvering between a road side unit (RSU) and an autonomous vehicle, and an operation method.

In accordance with an aspect of the present invention, the above and other objects can be accomplished by the provision of a cooperative maneuvering method based on infrastructure guidance, the cooperative maneuvering method including receiving a first message including a planned path from each of at least one vehicle, determining an infrastructure guidance path for the at least one vehicle based on the planned path, and transmitting a second message including the infrastructure guidance path to the at least one vehicle.

The determining may include determining one of an agreed path and an instruction path as the infrastructure guidance path based on at least one of traffic situation information or traffic law information for the at least one vehicle when a conflict occurs between the at least one vehicle according to the planned path.

The determining may include determining the planned path as the infrastructure guidance path when no conflict occurs between the at least one vehicle according to the planned path.

The at least one vehicle may be driven based on the infrastructure guidance path.

In accordance with another aspect of the present invention, there is provided a cooperative maneuvering apparatus based on infrastructure guidance, the cooperative maneuvering apparatus including a database configured to store data, and a processor configured to process the data, wherein the processor is configured to receive a first message including a planned path from each of at least one vehicle, determine an infrastructure guidance path for the at least one vehicle based on the planned path, and transmit a second message including the infrastructure guidance path to the at least one vehicle.

The processor may determine one of an agreed path and an instruction path as the infrastructure guidance path based on at least one of traffic situation information or traffic law information for the at least one vehicle when a conflict occurs between the at least one vehicle according to the planned path.

The processor may determine the planned path as the infrastructure guidance path when no conflict occurs between the at least one vehicle according to the planned path.

The at least one vehicle may be driven based on the infrastructure guidance path.

In accordance with a further aspect of the present invention, there is provided a storage medium storing a computer-executable program configured to perform cooperative maneuvering, the cooperative maneuvering including receiving a first message including a planned path from each of at least one vehicle, determining an infrastructure guidance path for the at least one vehicle based on the planned path, and transmitting a second message including the infrastructure guidance path to the at least one vehicle.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a diagram disclosing an example of a cooperative maneuvering system based on infrastructure guidance according to an embodiment;
FIG. 2 is a diagram disclosing an example of a cooperative maneuvering message based on infrastructure guidance according to an embodiment;
FIG. 3 is a flowchart disclosing an example of an operation method of an edge RSU for cooperative maneuvering based on infrastructure guidance according to an embodiment;
FIG. 4 is a flowchart disclosing an example of an operation method of a vehicle for cooperative maneuvering based on infrastructure guidance according to an embodiment;
FIG. 5 is a flowchart disclosing an example of a cooperative maneuvering method based on infrastructure guidance according to an embodiment; and
FIG. 6 is a flowchart disclosing an example of a cooperative maneuvering apparatus based on infrastructure guidance according to an embodiment.

### DETAILED DESCRIPTION

The present invention may be variously changed and have various embodiments, and specific embodiments will be illustrated in the drawings and described in detail.

Various features of the invention disclosed in the claims may be better understood in consideration of the drawings and detailed description. An apparatus, method, manufacturing method, and various embodiments disclosed in the specification are provided for illustrative purposes. The disclosed structural and functional features are intended to enable those skilled in the art to specifically implement various embodiments, and are not intended to limit the scope of the invention. The disclosed terms and sentences are intended to easily describe various features of the disclosed invention and are not intended to limit the scope of the invention.

In describing the present invention, when it is determined that a detailed description of related known technology may unnecessarily obscure the gist of the present invention, the detailed description will be omitted.

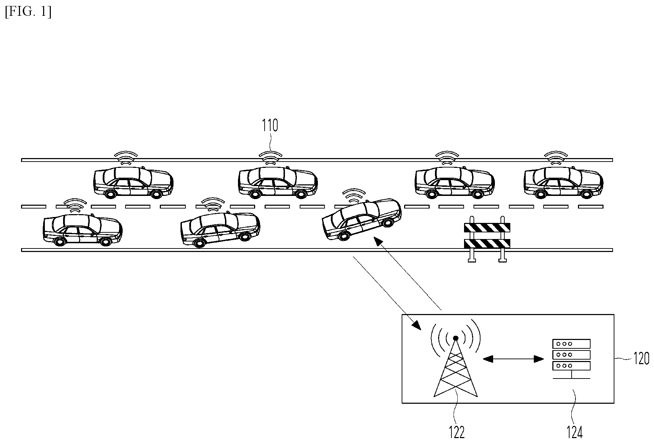

FIG. 1 is a diagram disclosing an example of a cooperative maneuvering system based on infrastructure guidance according to an embodiment.

In the example shown, the cooperative maneuvering system based on infrastructure guidance may include at least one vehicle 110 and an edge RSU 120.

According to the present invention, the edge RSU 120 may perform a cooperative maneuvering service based on infrastructure guidance that creates a coordinated and agreed path with respect to at least one vehicle 110. In one embodiment, the vehicle 110 may include an autonomous vehicle. In one embodiment, the edge RSU 120 may include an RSU 122, which is a roadside base station for V2X communication, and a multi-access edge computer (MEC) 124 connected to the RSU to process information collected by the RSU 122.

In one embodiment, the edge RSU 120 may be installed at an urban intersection where local path plans for a plurality of autonomous vehicles 110 need to be coordinated and agreed upon at the same time, or in an environment where lanes are reduced due to unexpected situations. In one embodiment, the RSU 122 may receive a planned path of each vehicle 110 from a plurality of surrounding autonomous vehicles 110 through V2X communication. Here, the planned path may include a local path plan of each vehicle 110.

The MEC 124 connected to the RSU 122 may generate a coordinated local path plan, that is, infrastructure guidance, for the plurality of autonomous vehicles 110. Further, the RSU 122 may transmit infrastructure guidance to the plurality of autonomous vehicles 110 through V2X communication. In this way, according to the present invention, it is possible to provide a message to be transmitted and received for cooperative maneuvering between the edge RSU 120 and the autonomous vehicle 110, and an operation method.

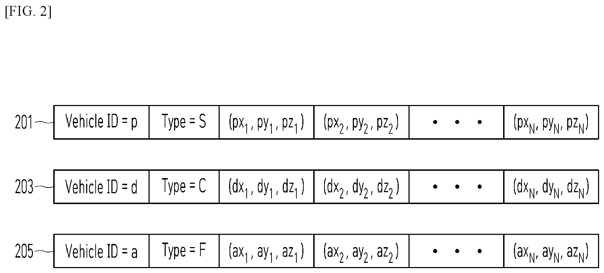

FIG. 2 is a diagram disclosing an example of a cooperative maneuvering message based on infrastructure guidance according to an embodiment.

Referring to FIG. 2, each autonomous vehicle 110 may transmit a maneuver sharing message (MSM) 201 including a planned path (planned trajectory) thereof to the edge RSU 120.

In this case, the MSM 201 may include a planned path including a trajectory having N waypoint coordinates (pxN, pyN, pzN) at specific time intervals (for example, 0.1 seconds) representing a travel path planned by a vehicle 110 having a vehicle ID = p. Here, depending on the value of the message type field, "S" may indicate a message transmitting the planned path.

In one embodiment, the edge RSU 120 may transmit maneuver coordinating messages (MCMs) 203 and 205 each including an agreed path or an instruction path to each autonomous vehicle 110.

In this case, the MCM 203 may include an agreed path (coordinated trajectory) including a trajectory having N waypoint coordinates (dxN, dyN, dzN) at specific time intervals (for example, 0.1 seconds) for a vehicle 110 having a vehicle ID = d. Here, depending on the value of the message type field, "C" may indicate a message transmitting the agreed path created by the edge RSU. In one embodiment, the MCM 203 including the agreed path may be referred to as an "agreed path message" or a term having an equivalent technical meaning.

In addition, the MCM 205 may include an instruction path (forced trajectory) including a trajectory having N waypoint coordinates (axN, ayN, azN) at specific time intervals (for example, 0.1 seconds) for a vehicle 110 having a vehicle ID = a. Here, "F" may indicate an instruction path created by the edge RSU 120. In one embodiment, the MCM 205 including the instruction path may be referred to as an "instruction path message" or a term having an equivalent technical meaning.

There is a difference in that, while the agreed path message created by the edge RSU 120 may be rejected by the vehicle having the vehicle ID = d, the instruction path message needs to be compulsorily followed by the vehicle having the vehicle ID = a.

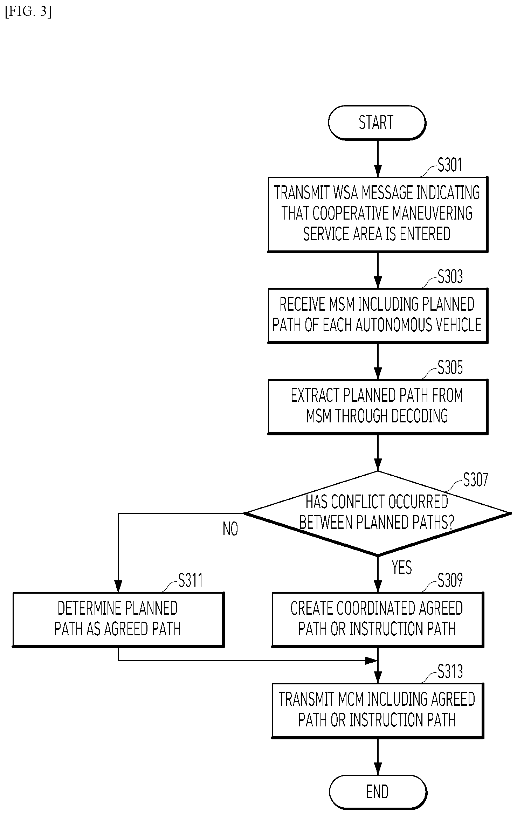

FIG. 3 is a flowchart disclosing an example of an operation method of the edge RSU for cooperative maneuvering based on infrastructure guidance according to an embodiment.

A wireless service advertisement (WSA) message indicating that a cooperative maneuvering service area is entered is transmitted to the vehicle 110 (S301). In one embodiment, the RSU 122 of the edge RSU 120 may broadcast a WSA message including content indicating that the cooperative maneuvering service is being performed.

As the WAS message is transmitted, an MSM including a planned path (planned trajectory) of each vehicle 110 is received from each vehicle 110 (S303). In one embodiment, the planned path may include coordinates of the vehicle 110 for each time slot of the vehicle 110.

The MSM is decoded to extract the planned path (S305). In one embodiment, the RSU 122 of the edge RSU 120 may decode each of MSMs including planned paths of the autonomous vehicles 110 and extract each planned path.

It is determined whether a conflict occurs between the planned paths of the vehicles 110 (S307). In one embodiment, the MEC 124 of the edge RSU 120 may compare trajectories of the planned paths of the autonomous vehicles 110 to determine whether a conflict (for example, collision, sudden stop, etc.) has occurred. In one embodiment, upon determining that a conflict has occurred, step S309 may be performed, and upon determining that a conflict has not occurred, step S311 may be performed.

Upon determining that a conflict has occurred, one of an agreed path and an instruction path is selected and created based on a traffic situation and traffic laws for each vehicle 110 (S309). In one embodiment, the MEC 124 of the edge RSU 120 may create an agreed path for each vehicle 110 using an optimization algorithm that coordinates a plurality of paths and creates an optimal agreed path. In one embodiment, the MEC 124 may create an optimal agreed path for the autonomous vehicles 110 by minimizing an average travel time of the autonomous vehicles 110 or finding a solution to an optimization problem of maximizing vehicle traffic per unit time through deep reinforcement learning or a rule-based algorithm under the condition that a conflict does not occur.

In one embodiment, an instruction path may be created in the case of a traffic situation in which driving cannot be performed by an autonomous driving algorithm included in each vehicle 110 (for example, a congested traffic situation due to tailgating at an intersection, a traffic situation in which one lane is reduced and merging vehicles and vehicles going straight become congested, or a state in which it is difficult to perform lane change and driving by a determination and control algorithm of an autonomous driving system). In other words, it is possible to create an instruction path that instructs driving by designating a traffic priority for each vehicle 110.

In one embodiment, each vehicle 110 may assign, as a weight for a traffic situation score, a first sensing value for the cooperative maneuvering service area created based on an autonomous driving algorithm through sensing of the corresponding vehicle 110 (for example, sensing through sensors such as radar, a LiDAR, and a camera included in the vehicle 110), and assign, as a weight for a traffic law score, a second sensing value for the cooperative maneuvering service area through sensing of the edge RSU 120 (for example, sensing through a sensor included in the edge RSU 120), thereby calculating an infrastructure guidance score. In this case, the traffic situation score may be calculated based on a degree of traffic congestion and traffic conflict, and the traffic law score may be calculated based on a type of traffic law violated during the conflict. Accordingly, when the finally calculated infrastructure guidance score is less than a threshold, the agreed path may be created, and when the infrastructure guidance score is greater than the threshold, the instruction path may be created.

Upon determining that a conflict has not occurred, a planned path of each vehicle 110 is determined as the agreed path (S311). In one embodiment, since the currently planned paths do not conflict with each other, the MEC 124 of the edge RSU 120 may set the currently planned paths of the autonomous vehicles 110 as agreed paths without change.

An MCM including the agreed path or the instruction path is transmitted to each vehicle 110 (S313). In one embodiment, the RSU 122 of the edge RSU 120 may transmit a message including a set agreed path or instruction path to the autonomous vehicles 110 as an agreed path message or an instruction path message.

In one embodiment, when the agreed path message is transmitted, each vehicle 110 may determine whether each vehicle 110 agrees to the agreed path based on the amount of dynamic state change required with respect to the conflict of the corresponding vehicle 110. In one embodiment, when the instruction path message is transmitted, driving of each vehicle 110 may be controlled according to the instruction path regardless of the planned path of the corresponding vehicle 110.

In one embodiment, respective steps of FIG. 3 may be performed simultaneously, sequentially, or in reverse order, and at least one step may be omitted.

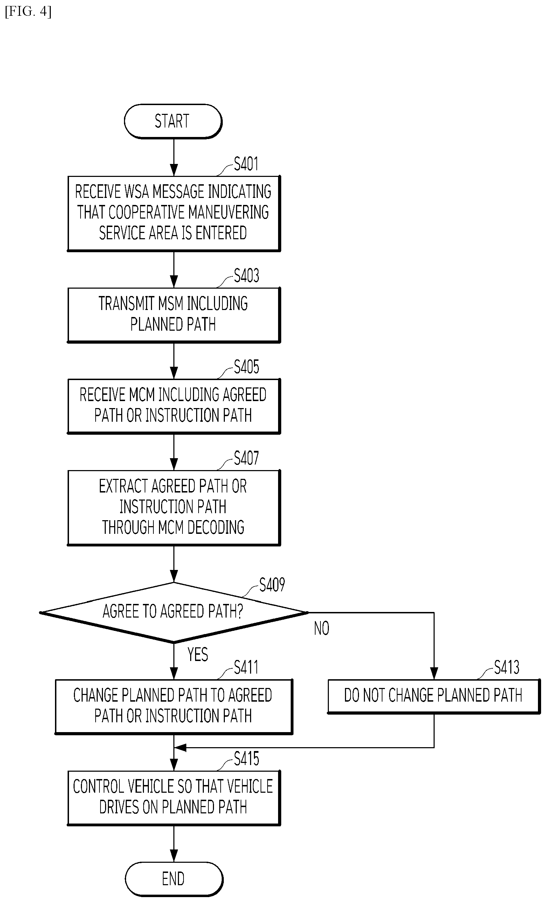

FIG. 4 is a flowchart disclosing an example of an operation method of a vehicle for cooperative maneuvering based on infrastructure guidance according to an embodiment.

The WSA message indicating that the cooperative maneuvering service area is entered is received from the edge RSU 120 (S401). In one embodiment, the WSA may be decoded to confirm that the corresponding area is the cooperative maneuvering service area.

An MSM including the planned path of the vehicle 110 is transmitted to the edge RSU 120 (S403). In one embodiment, an MSM including a planned path (planned trajectory) of each autonomous vehicle 110 may be transmitted.

An MCM including an agreed path or an instruction path determined based on the planned path is received from the edge RSU 120 (S405). In one embodiment, a corresponding agreed path message or instruction path message including the agreed path or the instruction path may be received.

The agreed path or the instruction path is extracted from the MCM (S407). In one embodiment, the agreed path message or the instruction path message may be decoded, and the agreed path or the instruction path proposed by the edge RSU 120 to each autonomous vehicle 110 may be extracted.

Whether to agree to the agreed path is determined (S409). In one embodiment, the edge RSU 120 may determine whether to agree to the agreed path proposed to the autonomous vehicle 110. In one embodiment, it is possible to determine that the agreed path cannot be agreed upon when the amount of dynamic state change (for example, acceleration, a yaw rate, etc.) of each vehicle 110 required for passage of the agreed path is greater than a predetermined threshold (for example, a speed needs to be excessively reduced, etc.). In one embodiment, the threshold may be determined based on a ride comfort set value and a safety set value set by a user riding the vehicle 110 and a type of conflict determined by the edge RSU 120.

When agreeing to the agreed path, step S411 may be performed, and when not agreeing to the agreed path, step S413 may be performed. In one embodiment, when the instruction path message is received in step S405, step S411 may be performed since the instruction path needs to be unconditionally agreed upon.

When agreeing to the agreed path, the planned path is changed to the agreed path (S411). In one embodiment, each autonomous vehicle 110 may change the planned path thereof to the agreed path. In one embodiment, when the instruction path message is received in step S405, the planned path may be changed to the instruction path.

When not agreeing to the agreed path, the planned path thereof is maintained without changing the planned path (S413). In one embodiment, each autonomous vehicle 110 may maintain the current planned path thereof without changing. In one embodiment, when each autonomous vehicle does not change the planned path since the agreed path is not agreed upon, if a collision may occur, a planned path may be established to avoid collision by reducing the speed using the autonomous driving algorithm of the vehicle 110.

The vehicle is controlled so that the vehicle drives on a finally determined planned path (S415). In one embodiment, the vehicle 110 may be controlled so that the vehicle 110 moves along a currently planned path.

In one embodiment, respective steps of FIG. 4 may be performed simultaneously, sequentially, or in reverse order, and at least one step may be omitted.

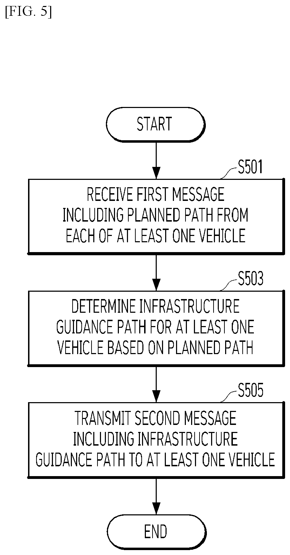

FIG. 5 is a flowchart disclosing an example of a cooperative maneuvering method based on infrastructure guidance according to an embodiment.

A first message including a planned path is received from each of at least one vehicle (S501). In one embodiment, the first message may be referred to as "MSM" or a term having an equivalent technical meaning.

An infrastructure guidance path for at least one vehicle is determined based on the planned path (S503). In one embodiment, when a conflict occurs between at least one vehicle according to the planned path, one of the agreed path and the instruction path may be determined as the infrastructure guidance path based on at least one of traffic situation information or traffic law information for the at least one vehicle.

In one embodiment, when no conflict occurs between the at least one vehicle according to the planned path, the planned path may be determined as the infrastructure guidance path, which will be understood with reference to the content described above with reference to FIG. 3.

A second message including the infrastructure guidance path is transmitted to at least one vehicle (S505). In one embodiment, at least one vehicle may be driven based on the infrastructure guidance path, which will be understood with reference to the content described above with reference to FIG. 4. In one embodiment, the second message may be referred to as "MCM" or a term having an equivalent technical meaning.

In one embodiment, each step of FIG. 5 may be performed by the edge RSU 120. In one embodiment, respective steps of FIG. 5 may be performed simultaneously, sequentially, or in reverse order, and at least one step may be omitted.

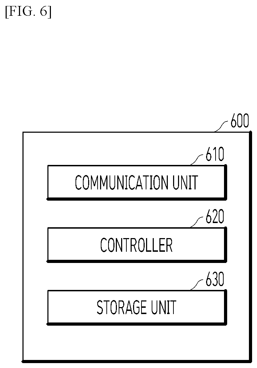

FIG. 6 is a flowchart disclosing an example of a cooperative maneuvering apparatus based on infrastructure guidance according to an embodiment.

Referring to FIG. 6, a cooperative maneuvering apparatus 600 may include a communication unit 610, a controller 620, and a storage unit 630. In one embodiment, the cooperative maneuvering apparatus 600 may include the edge RSU 120.

The communication unit 610 may receive a first message including a planned path from each of at least one vehicle. In one embodiment, the communication unit 610 may include at least one of a wired communication module or a wireless communication module. All or part of the communication unit 610 may be referred to as a "transmitter," "receiver," or "transceiver." In one embodiment, the communication unit 610 may include the RSU 122 of FIG. 1.

The controller 620 may determine an infrastructure guidance path for the at least one vehicle based on the planned path. In one embodiment, the communication unit 610 may transmit a second message including the infrastructure guidance path to at least one vehicle.

In one embodiment, the controller 620 may include at least one processor or microprocessor, or may be part of a processor. In addition, the controller 620 may be referred to as a communication processor (CP). The controller 620 may control an operation of the cooperative maneuvering apparatus 600 according to various embodiments of the present invention using at least one of the communication unit 610 or the storage unit 630. In one embodiment, the controller 620 may include the MEC 124 of FIG. 1.

The storage unit 630 may store at least one of a planned path, an agreed path, or an instruction path. In one embodiment, the storage unit 630 may store a path creation artificial intelligence model. In one embodiment, the storage unit 630 may be configured as a volatile memory, a nonvolatile memory, or a combination of the volatile memory and the nonvolatile memory. Further, the storage unit 630 may provide stored data upon request from the controller 620. In one embodiment, the storage unit 630 may include a storage medium configured to store a program executable by a computer that performs cooperative maneuvering.

In one embodiment, the cooperative maneuvering apparatus 600 may further include a sensor unit (not shown), and the sensor unit may perform sensing for the cooperative maneuvering service area. For example, the sensor unit may include radar, a LiDAR, and a camera. However, the sensor is not limited thereto and may include various sensors.

Referring to FIG. 6, the cooperative maneuvering apparatus 600 may include the communication unit 610, the controller 620, and the storage unit 630. In various embodiments of the present invention, the components described with reference to FIG. 6 are not essential in the cooperative maneuvering apparatus 600. Therefore, the cooperative maneuvering apparatus 600 may be implemented using more or fewer components than those illustrated in FIG. 6.

According to the disclosed embodiments, cooperative maneuvering technology may be provided to be able to predict and avoid collisions or interference in advance by considering the driving intentions of surrounding vehicles.

Further, according to the disclosed embodiments, a local path plan for a plurality of autonomous vehicles may be agreed upon at the same time using an agreed path or an instruction path created from a local planned path.

The above description is merely an illustrative description of the technical idea of the present invention, and those skilled in the art will be able to make various changes and modifications without departing from the essential characteristics of the present invention.

Accordingly, the embodiments disclosed in this specification are not intended to limit the technical idea of the present invention and are intended for description, and the scope of the present invention is not limited by these embodiments. The scope of protection of the present invention should be interpreted in accordance with the claims, and all technical ideas within the equivalent scope should be understood to be included in the scope of rights of the present invention.

## Claims

1. A cooperative maneuvering method based on infrastructure guidance, the cooperative maneuvering method comprising:
receiving a first message comprising a planned path from each of at least one vehicle;
determining an infrastructure guidance path for the at least one vehicle based on the planned path; and
transmitting a second message comprising the infrastructure guidance path to the at least one vehicle.

2. The cooperative maneuvering method according to claim 1, wherein the determining comprises determining one of an agreed path and an instruction path as the infrastructure guidance path based on at least one of traffic situation information or traffic law information for the at least one vehicle when a conflict occurs between the at least one vehicle according to the planned path.

3. The cooperative maneuvering method according to claim 1 or 2, wherein the determining comprises determining the planned path as the infrastructure guidance path when no conflict occurs between the at least one vehicle according to the planned path.

4. The cooperative maneuvering method according to claim 1, 2, or 3, wherein the at least one vehicle is driven based on the infrastructure guidance path.

5. A cooperative maneuvering apparatus based on infrastructure guidance, the cooperative maneuvering apparatus comprising:
a database configured to store data; and
a processor configured to process the data, wherein the processor is configured to:
receive a first message comprising a planned path from each of at least one vehicle;
determine an infrastructure guidance path for the at least one vehicle based on the planned path; and
transmit a second message comprising the infrastructure guidance path to the at least one vehicle.

6. The cooperative maneuvering apparatus according to claim 5, wherein the processor determines one of an agreed path and an instruction path as the infrastructure guidance path based on at least one of traffic situation information or traffic law information for the at least one vehicle when a conflict occurs between the at least one vehicle according to the planned path.

7. The cooperative maneuvering apparatus according to claim 5 or 6, wherein the processor determines the planned path as the infrastructure guidance path when no conflict occurs between the at least one vehicle according to the planned path.

8. The cooperative maneuvering apparatus according to claim 5, 6, or 7, wherein the at least one vehicle is driven based on the infrastructure guidance path.

9. A storage medium storing a computer-executable program configured to perform cooperative maneuvering, the cooperative maneuvering comprising:
receiving a first message comprising a planned path from each of at least one vehicle;
determining an infrastructure guidance path for the at least one vehicle based on the planned path; and
transmitting a second message comprising the infrastructure guidance path to the at least one vehicle.
